# EUROPEAN PATENT SPECIFICATION

(11) **EP 0 585 493 B1**
(45) Date of publication and mention of the grant of the patent: **23.07.1997**
(21) Application number: 92202611.7
(22) Date of filing: 01.09.1992
(51) Int. Cl.: C08G 67/02, C07F 9/50

(54) **Catalyst compositions for the preparation of polymers of carbon monoxide with olefinically unsaturated compounds**
Katalysatorzusammensetzungen für die Herstellung von Polymeren aus Kohlenmonoxid und olefinisch ungesättigten Verbindungen
Compositions de catalyseur pour la préparation de polymères de monoxyde de carbone et de composés oléfiniquement insaturés

(43) Date of publication of application: 09.03.1994
(73) Proprietor: SHELL INTERNATIONALE RESEARCH MAATSCHAPPIJ B.V., 2596 HR Den Haag (NL)
(72) Inventor: Van Doorn, Johannes Adrianus, NL-1031 CM Amsterdam (NL); Van Der Heijden, Harry, NL-1031 CM Amsterdam (NL); Stil, Hans Arie, NL-1031 CM Amsterdam (NL)

(56) References cited:
- EP-A- 0 121 965

## Description

The invention relates to novel catalyst compositions suitable for use in the preparation of polymers of carbon monoxide with one or more olefinically unsaturated compounds.

High molecular weight linear alternating polymers of carbon monoxide with one or more olefinically unsaturated compounds, i.e. linear polymers in which the units originating in carbon monoxide and the units originating in the olefinically unsaturated compounds are present in a substantially alternating order, can be prepared by contacting the monomers with a catalyst composition containing a Group VIII metal and a phosphorus bidentate ligand of the general formula R¹R²P-R-PR³R⁴ in which R¹ to R⁴ represent identical or different optionally polar substituted hydrocarbyl groups and R is a divalent bridging group of which the bridge connecting the two phosphorus atoms consists of three carbon atoms, the central carbon atom of the bridge carrying two hydrogen atoms.

In the aforesaid polymer preparation, both the polymerization rate and the average molecular weight of the resulting polymers play an important role. On the one hand it is desirable to achieve the highest possible reaction rate in the polymer preparation, while on the other hand, with a view to their possible applications, polymers are more valuable the higher their average molecular weight. Both the reaction rate and the average molecular weight can be influenced by the temperature employed in the polymerization. The effect of the temperature on the polymerization rate and on the average molecular weight is, however, in opposite directions, viz. an increase in the reaction temperature leads to an increase in the reaction rate and to a decrease in the average molecular weight of the resulting polymers, if the other reaction conditions remain unchanged. In practice, this means that with a view to the application of the polymers the reaction temperature is chosen such as to obtain polymers with an average molecular weight which is sufficiently high for the particular application and the reaction rate corresponding to that temperature has to be accepted.

It has now surprisingly been found that the behaviour of the catalyst compositions can be improved considerably by replacing in the phosphorus bidentate ligand both hydrogen atoms which are attached to the central carbon atom of the bridge connecting the two phosphorus atoms, one hydrogen atom by an alkyl group and the other by a hydroxyl group. Comparison of the behaviour of the original catalyst compositions containing a phosphorus bidentate ligand in which the central carbon atom of the bridge carries two hydrogen atoms with that of the modified catalyst compositions containing a phosphorus bidentate ligand in which the central carbon atom of the bridge carries an alkyl group and a hydroxyl group shows that when both the compositions are employed for the preparation of polymers with equal average molecular weight, the modified compositions exhibit a substantially higher reaction rate.

The present patent application therefore relates to catalyst compositions, based upon a Group VIII metal and a phosphorus bidentate ligand of the general formula R¹R²P-R⁵-PR³R⁴ in which R¹ to R⁴ represent identical or different optionally polar substituted hydrocarbyl groups and R⁵ is a divalent bridging group of which the bridge connecting the two phosphorus atoms consists of three carbon atoms, the central carbon atom of the bridge carrying an alkyl group and a hydroxyl group as substituents.

The present patent application further relates to a process for preparation of polymers of carbon monoxide with one more olefinically unsaturated compounds using these catalyst compositions. The patent application also relates to novel diphosphines and their preparation.

The present finding is surprising in view of the fact that when both hydrogen atoms in the phosphorus bidentate ligand are replaced - one hydrogen atom by an aryl group instead of an alkyl group and the other again by a hydroxyl group - a considerable fall in the reaction rate of the catalyst composition occurs.

The present finding is also surprising in view of other recent findings that many other substitutions on the central carbon atom of the bridge led to disappointing results. It was found, for example, that the replacement of one of the aforesaid hydrogen atoms by an aralkyloxy group resulted in a sharp fall in both the reaction rate and the average molecular weight of the polymers obtained. A similar deterioration of the behaviour of the catalyst compositions occurred when both the hydrogen atoms were replaced, one by an alkyl group and the other by a diarylphosphinoalkyl group. It was also found that replacing both hydrogen atoms by one methylene group did not significantly improve the behaviour of the catalyst composition.

In this patent application, Group VIII metals are understood to be the noble metals ruthenium, rhodium, palladium, osmium, iridium and platinum, as well as the iron group metals iron, cobalt and nickel. In the catalyst compositions according to the invention the Group VIII metal is preferably chosen from palladium, nickel and cobalt. Palladium is particularly preferred as Group VIII metal. The incorporation of the Group VIII metal in the catalyst compositions preferably takes place in the form of a salt, typically a salt of a carboxylic acid, in particular in the form of an acetate.

In addition to a Group VIII metal and a phosphorus bidentate ligand, the catalyst compositions according to the invention contain preferably an anion of an acid with a pKa of less than 4 and in particular an anion of an acid with a pKa of less than 2. Examples of acids with a pKa of less than 2 are mineral acids such as sulphuric acid and perchloric acid, sulphonic acids such as methanesulphonic acid, trifluoromethanesulphonic acid and para-toluenesulphonic acid, and halocarboxylic acids such as trichloroacetic acid, difluoroacetic acid and trifluoroacetic acid. There is preference for a sulphonic acid such as para-toluenesulphonic acid or a halocarboxylic acid such as trifluoroacetic acid. The anion may be introduced into the catalyst composition either in the form of a compound from which the desired anion splits off or in the form of a mixture of compounds from which the desired anion is formed by mutual reaction. The anion is typically incorporated in the catalyst compositions in the form of an acid. If desired, the anion may also be included in the catalyst composition in the form of a main group metal salt or a non-noble transition metal salt of the acid. If an anion of a carboxylic acid is chosen, the incorporation thereof in the catalyst composition may take place in the form of the acid or in the form of a derivative thereof, such as an alkyl or aryl ester, an amide, an imide, an anhydride, an ortho-ester, a lactone, a lactam or an alkylidene dicarboxylate.

The anion is preferably present in the catalyst compositions in a quantity of 1-100 and in particular 2-50 mol per gram atom Group VIII metal. As well as by being used as a separate component, the anion of an acid with a pKa of less than 4 may also be present in the catalyst composition by, for example, palladium trifluoroacetate or palladium para-tosylate being used as Group VIII metal compound.

In addition to a Group VIII metal, a phosphorus bidentate ligand and optionally an anion of an acid with a pKa of less than 4, the catalyst compositions according to the invention may also contain an organic oxidizing agent. Examples of suitable organic oxidizing agents are 1,2- and 1,4-quinones, aliphatic nitrites such as butyl nitrite and aromatic nitro compounds such as nitrobenzene and 2,4-dinitrotoluene. 1,4-benzoquinone and 1,4-naphthoquinone are preferred. The quantity of organic oxidizing agent employed is preferably 5-5000 and in particular 10-1000 mol per gram atom Group VIII metal.

In the catalyst compositions according to the invention the phosphorus bidentate ligand is preferably present in a quantity of 0.5-2 and in particular 0.75-1.5 mol per gram atom Group VIII metal. In the phosphorus bidentate ligand the groups R¹ to R⁴ are preferably optionally polar substituted aromatic hydrocarbyl groups. Examples of suitable groups R¹ to R⁴ are the phenyl group and the 2-methoxyphenyl group. Preferably, the groups R¹ to R⁴ are identical to one another. There is further preference for phosphorus bidentate ligands in which the first and third carbon atoms of the bridge connecting the two phosphorus atoms each carry two hydrogen atoms. The alkyl group which is attached as a substituent to the central carbon atom of the bridge preferably contains not more than six carbon atoms and is typically a n-alkyl group. Examples of suitable alkyl substituents are methyl, ethyl and n-propyl groups. Very favourable results can be obtained when catalyst compositions are used containing 2-hydroxy-2-methyl-1,3-bis(diphenylphosphino)propane as phosphorus bidentate ligand.

Diphosphines of the general formula (R¹)₂P-CH₂-C(OH)(R⁶)-CH₂-P(R¹)₂ in which R⁶ represents an alkyl or aryl group are novel compounds. The present patent application also relates to these novel compounds and to their preparation as far as R⁶ represents an alkyl group. The preparation of these novel diphosphines may take place by the reaction of a compound of the general formula M(R¹)₂P in which M represents an alkali metal atom with a compound of the general formula 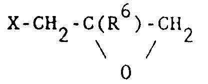 or with a compound of the general formula X-CH₂-C(OH)(R⁶)-CH₂-X, in which general formulae X represents a halogen atom. For example, 2-hydroxy-2-methyl-1,3-bis(diphenylphosphino)propane may suitably be prepared by the reaction of sodium diphenylphosphide with 1-chloro-2,3-epoxy-2-methylpropane, while 2-hydroxy-2-phenyl-1,3-bis(diphenylphosphino)propane may suitably be prepared by the reaction of sodium diphenylphosphide with 1,3-dichloro-2-hydroxy-2-phenylpropane.

The polymerization using the catalyst compositions according to the invention is preferably carried out by contacting the monomers with a solution of the catalyst composition in a diluent in which the polymers are insoluble or virtually insoluble. Lower alcohols such as methanol are very suitable as diluents. If desired, the polymerization may also be carried out in the gas phase. The olefinically unsaturated compounds which can be polymerized with carbon monoxide using the catalyst compositions according to the invention are eligibly compounds which consist of carbon and hydrogen or compounds which in addition to carbon and hydrogen also contain one or more heteroatoms. The catalyst compositions according to the invention are preferably used in the preparation of polymers of carbon monoxide with one or more olefinically unsaturated hydrocarbons, typically containing up to 20 carbon atoms. Examples of suitable hydrocarbon monomers are ethene, propene, butene-1, hexene-1, octene-1, styrene, cyclopentene, norbornene and dicyclopentadiene. The catalyst compositions according to the invention are in particular very suitable for use in the preparation of copolymers of carbon monoxide with ethene and in the preparation of terpolymers of carbon monoxide with ethene and with an α-olefin, in particular propene.

The quantity of catalyst composition used in the preparation of the polymers can vary within wide limits. Per mol olefinically unsaturated compound to be polymerized, a quantity of catalyst composition is preferably used which contains 10⁻⁷-10⁻³ and in particular 10⁻⁶-10⁻⁴ gram atom Group VIII metal.

The preparation of the polymers is preferably carried out at a temperature of 25-150 °C and a pressure of 2-150 bar and in particular at a temperature of 30-130 °C and a pressure of 5-100 bar. The molar ratio of the olefinically unsaturated compounds relative to carbon monoxide in the mixture to be polymerized is preferably 10:1-1:10 and in particular 5:1-1:5. The polymerization can be carried out either batchwise or continuously.

The higher the average molecular weight of the polymers prepared according to the invention, the higher will also be their intrinsic viscosity. In this patent application the term "Limiting Viscosity Number" (LVN) recommended by the IUPAC will hereinafter be used instead of "intrinsic viscosity". The quoted LVNs were determined at 60 °C in meta-cresol as solvent.

The invention will now be illustrated with reference to the following examples.

### Example 1

2-hydroxy-2-methyl-1,3-bis(diphenylphosphino)propane was prepared as follows. 22.8 g (87.0 mmol) triphenylphosphine was added to a solution of 4.0 g (174 mmol) sodium in 400 ml liquid ammonia while the solution was maintained at -78 °C. After 45 minutes stirring at -78 °C, 4.2 g (78.5 mmol) ammonium chloride was added. After 30 minutes a solution of 4.63 g (43.5 mmol) 1-chloro-2,3-epoxy-2-methylpropane in 150 ml tetrahydrofuran was added. After evaporation of ammonia, the reaction mixture was worked up as follows. The solvent was removed under reduced pressure and water and dichloromethane were added to the residue. The organic layer was separated and filtered. After removal of the solvent, the solid residue was washed with n-hexane. The yield of 2-hydroxy-2-methyl-1,3-bis(diphenylphosphino)propane was 14 g (73%).

### Example 2

2-hydroxy-2-phenyl-1,3-bis(diphenylphosphino)propane was prepared as follows. 23.95 g (91.4 mmol) triphenylphosphine was added to a solution of 4.2 g (183 mmol) sodium in 400 ml liquid ammonia while the solution was maintained at -78 °C. After 45 minutes stirring at -78 °C, 2.14 g (40 mmol) ammonium chloride was added. After 30 minutes a solution of 9.23 g (45 mmol) 1,3-dichloro-2-hydroxy-2-phenylpropane in 150 ml ether was added. After evaporation of ammonia, the reaction mixture was worked up in the same way as in example 1. The yield of 2-hydroxy-2-phenyl-1,3-bis(diphenylphosphino)propane was 15 g (66%).

### Example 3 (for comparison)

A carbon monoxide/ethene copolymer was prepared as follows. A stirred autoclave with a volume of 300 ml was charged with 200 ml methanol. The air present in the autoclave was expelled by pressurizing the autoclave with carbon monoxide to a pressure of 50 bar, then releasing the pressure and repeating this operation a further two times. After the autoclave content had been brought to 65 °C, a 1:1 carbon monoxide/ethene mixture was introduced until a pressure of 55 bar was reached. Subsequently a catalyst solution consisting of:
6 ml methanol,
0.02 mmol palladium acetate,
0.04 mmol para-toluenesulphonic acid, and
0.02 mmol 1,3-bis(diphenylphosphino)propane
was introduced into the autoclave.

During the polymerization the pressure was maintained by supplying a 1:1 carbon monoxide/ethene mixture. After 3 hours the polymerization was terminated by cooling the reaction mixture to room temperature and releasing the pressure. The polymer was filtered off, washed with methanol and dried. The copolymer thus prepared had an LVN(60) of 1.2 dl/g. The reaction rate was 1.3 kg copolymer/(g palladium.hour).

### Example 4 (for comparison)

A carbon monoxide/ethene copolymer was prepared in substantially the same way as in example 3, but with the difference that a reaction temperature of 85 °C was employed instead of 65 °C. The copolymer thus prepared had an LVN(60) of 0.6 dl/g. The reaction rate was 5.0 kg copolymer/(g palladium.hour).

### Example 5 (for comparison)

A carbon monoxide/ethene copolymer was prepared in substantially the same way as in example 3, but with the following differences:
a) the catalyst solution contained 0.02 mmol 2-(diphenylphosphinomethyl)-3-(diphenylphosphino)propene-1 instead of 1,3-bis(diphenylphosphino)propane, and
b) the reaction temperature was 85 °C instead of 65 °C.

The copolymer thus prepared had an LVN(60) of 0.6 dl/g. The reaction rate was 5.4 kg copolymer/(g palladium.hour).

### Example 6 (for comparison)

A carbon monoxide/ethene copolymer was prepared as follows. A stirred autoclave with a volume of 300 ml was charged with 200 ml methanol. After the autoclave contents had been brought to 85 °C, a 1:1 carbon monoxide/ethene mixture was introduced until a pressure of 55 bar was reached. Subsequently a catalyst solution consisting of:
6 ml methanol,
0.01 mmol palladium acetate,
0.02 mmol trifluoroacetic acid, and
0.01 mmol 1,3-bis(diphenylphosphino)propane
was introduced into the autoclave.

During the polymerization the pressure was maintained by supplying a 1:1 carbon monoxide/ethene mixture. After 5 hours the polymerization was terminated by cooling the reaction mixture to room temperature and releasing the pressure. The polymer was filtered off, washed with methanol and dried. The copolymer thus prepared had an LVN(60) of 1.0 dl/g. The reaction rate was 5.6 kg copolymer/(g palladium.hour).

### Example 7 (for comparison)

A carbon monoxide/ethene copolymer was prepared in substantially the same way as in example 6, but with the difference that the catalyst solution contained 0.02 mmol para-toluenesulphonic acid instead of trifluoroacetic acid and 0.01 mmol 2-methyl-2-(diphenylphosphinomethyl)-1,3-bis(diphenylphosphino)propane instead of 1,3-bis(diphenylphosphino)propane. The copolymer thus prepared had an LVN(60) of 0.7 dl/g. The reaction rate was 4.7 kg copolymer/(g palladium.hour).

### Example 8 (for comparison)

A carbon monoxide/ethene/propene terpolymer was prepared as follows. A stirred autoclave with a volume of 300 ml was charged with a catalyst solution consisting of:
135 ml methanol,
4 ml acetone,
0.009 mmol palladium acetate,
0.19 mmol trifluoroacetic acid, and
0.01 mmol 1,3-bis(diphenylphosphino)propane.

The air present in the autoclave was expelled by pressurizing the autoclave with carbon monoxide to a pressure of 50 bar, then releasing the pressure and repeating this operation a further two times. After the autoclave content had been brought to 80 °C, 25 bar carbon monoxide was introduced, then 10 bar propene and finally 15 bar ethene, so that the total pressure was 50 bar. During the polymerization the pressure in the autoclave was maintained by supplying a 1:1 carbon monoxide/ethene mixture. After 3.1 hours the polymerization was terminated by cooling the reaction mixture to room temperature and releasing the pressure. The polymer was filtered off, washed with methanol and dried. The terpolymer thus prepared had an LVN(60) of 0.5 dl/g. The reaction rate was 4.4 kg terpolymer/(g palladium.hour).

### Example 9 (for comparison)

A carbon monoxide/ethene/propene terpolymer was prepared in substantially the same way as in example 8, but with the following differences:
a) the catalyst solution contained 0.01 mmol 2-benzyloxy-1,3-bis(diphenylphosphino)propane instead of 1,3-bis(diphenylphosphino)propane,
b) the reaction temperature was 85 °C instead of 80 °C, and
c) the reaction time was 2.7 hours instead of 3.1 hours.

The terpolymer thus prepared had an LVN(60) of 0.3 dl/g. The reaction rate was 3.0 kg terpolymer/(g palladium.hour).

### Example 10 (for comparison)

A carbon monoxide/ethene copolymer was prepared as follows. A stirred autoclave with a volume of 266 ml was charged with 133 ml methanol. The air present in the autoclave was expected by pressurizing the autoclave with carbon monoxide to a pressure of 50 bar, then releasing the pressure and repeating this operation a further two times. A catalyst solution consisting of:
7 ml acetone,
0.017 mmol palladium acetate,
0.036 mmol para-toluenesulphonic acid, and
0.018 mmol 1,3-bis(diphenylphosphino)propane
was introduced into the autoclave.

After the autoclave content had been brought to 85 °C, a 1:1 carbon monoxide/ethene mixture was introduced until a pressure of 55 bar was reached. During the polymerization the pressure was maintained by supplying in a 1:1 carbon monoxide/ethene mixture. After 1.75 hours the polymerization was terminated by cooling the reaction mixture to room temperature and releasing the pressure. The polymer was filtered off, washed with methanol and dried. The copolymer thus prepared had an LVN(60) of 0.9 dl/g. The reaction rate was 3.7 kg copolymer/(g palladium.hour).

### Example 11

A carbon monoxide/ethene copolymer was prepared in substantially the same way as in example 10, but with the following differences:
a) the catalyst solution contained 0.016 mmol palladium acetate instead of 0.017 mmol and 0.018 mmol 2-hydroxy-2-methyl-1,3-bis(diphenyl- phosphino)propane instead of 1,3-bis(diphenylphosphino)propane, and
b) The reaction time was 1.52 hours instead of 1.75 hours.

The copolymer thus prepared had an LVN(60) of 1.0 dl/g. The reaction rate was 5.6 kg copolymer/(g palladium.hour).

### Example 12 (for comparison)

A carbon monoxide/ethene copolymer was prepared in substantially the same way as in example 10, but with the following differences:
a) the catalyst solution contained 0.016 mmol palladium acetate instead of 0.017 mmol, 0.035 mmol para-toluenesulphonic acid instead of 0.036 mmol and 0.019 mmol 2-hydroxy-2-phenyl-1,3-bis(diphenyl- phosphino)propane instead of 1,3-bis(diphenylphosphino)propane, and
b) The reaction time was 1.23 hours instead of 1.75 hours.

The copolymer thus prepared had an LVN(60) of 1.0 dl/g. The reaction rate was 2.6 kg copolymer/(g palladium.hour).

Of the examples 1-12, example 11 is according to the invention. In this example a carbon monoxide/ethene copolymer was prepared using a catalyst composition containing 2-hydroxy-2-methyl-1,3-bis(diphenyl- phosphino)propane as phosphorus bidentate ligand. Examples 1 and 2 relate to the preparation of the new compounds 2-hydroxy-2-methyl-1,3-bis(diphenylphosphino)propane and 2-hydroxy-2-phenyl-1,3-bis(diphenylphosphino)propane.

Comparison of the results of examples 3 and 4, both carried out with a catalyst composition containing 1,3-bis(diphenylphosphino)propane as phosphorus bidentate ligand, shows the influence of the polymerization temperature, both on the reaction rate and on the average molecular weight of the prepared polymers.

Examples 5, 7, 9, 11 and 12 demonstrate the influence on the behaviour of the catalyst composition which is the result of replacing one of the two hydrogen atoms which are linked to the central carbon atom of the bridge connecting the two phosphorus atoms of the phosphorus bidentate ligand. Comparison of the results of examples 4 and 5 shows that the replacement of both hydrogen atoms by one methylene group does not significantly improve the behaviour of the catalyst composition. Comparison of the results of examples 6 and 7 and comparison of the results of examples 8 and 9 shows that the replacement of both hydrogen atoms - one by an alkyl group and the other by a diarylphosphinoalkyl group - and also the replacement of just one of the hydrogen atoms by an aralkyloxy group, results in a reduction in both the reaction rate and the average molecular weight of the prepared polymers. Comparison of the results of examples 10-12 shows the effect of the replacement of both hydrogen atoms - one by a hydroxyl group and the other by an alkyl or aryl group. Whereas substitution of an alkyl group (example 11) leads to a considerable rise in the reaction rate, substitution of an aryl group (example 12) results in a considerable drop in the reaction rate.

It was established by NMR analysis that the polymers prepared according to examples 3-12 were built up of linear chains in which the units originating in carbon monoxide and the units originating in the olefins were present in an alternating order. In the carbon monoxide/ethene/propene terpolymer prepared according to examples 8 and 9 the units originating ethene and propene were present in a random distribution.

## Claims

1. Catalyst compositions, based upon a Group VIII metal and a phosphorus bidentate ligand of the general formula R¹R²P-R⁵-PR³R⁴ in which R¹ to R⁴ represent identical or different optionally polar substituted hydrocarbyl groups and R⁵ is a divalent bridging group of which the bridge connecting the two phosphorus atoms consists of three carbon atoms, the central carbon atom of the bridge carrying an alkyl group and a hydroxyl group as substituents.

2. Catalyst compositions according to claim 1, characterized in that they contain palladium as Group VIII metal which is incorporated therein in the form of a salt such as an acetate.

3. Catalyst compositions according to claim 1 or 2, characterized in that they additionally contain an anion of an acid with a pKa of less than 4.

4. Catalyst compositions according to claim 3, characterized in that they contain an anion of an acid with a pKa of less than 2.

5. Catalyst compositions according to claim 3 or 4, characterized in that they contain the anion of an acid with a pKa of less than 4 in a quantity of 2-50 mol per gram atom Group VIII metal, and the phosphorus bidentate ligand in a quantity of 0.75-1.5 mol per gram atom Group VIII metal.

6. Catalyst compositions according to one or more of claims 1-5, characterized in that they contain a phosphorus bidentate ligand in which the groups R¹ to R⁴ are optionally polar substituted aromatic hydrocarbyl groups.

7. Catalyst compositions according to one or more of claims 1-6, characterized in that they contain a phosphorus bidentate ligand in which the first and third carbon atoms of the bridge connecting the two phosphorus atoms each carry two hydrogen atoms.

8. Catalyst compositions according to one or more of claims 1-7, characterized in that they contain a phosphorus bidentate ligand in which the alkyl group which occurs as a substituent on the central carbon atom of the bridge contains not more than six carbon atoms.

9. Catalyst compositions according to claim 8, characterized in that they contain 2-hydroxy-2-methyl-1,3-bis(diphenylphosphino)propane as phosphorus bidentate ligand.

10. Process for the preparation of polymers, characterized in that a mixture of carbon monoxide with one or more olefinically unsaturated compounds is contacted with a catalyst composition according to one or more of claims 1-9.

11. Process according to claim 10, characterized in that the monomers are contacted with a solution of the catalyst composition in a diluent in which the polymers are insoluble or virtually insoluble, such as methanol.

12. Process according to claim 10 or 11, characterized in that as olefinically unsaturated compounds hydrocarbons are employed, such as ethene or a mixture of ethene with an α-olefin such as propene and in that it is carried out at a temperature of 30-130 °C, a pressure of 5-100 bar and a molar ratio of the olefinically unsaturated compounds relative to carbon monoxide in the mixture to be polymerized of 5:1 to 1:5 and that per mol olefinically unsaturated compound to be polymerized a quantity of catalyst composition is used which contains 10⁻⁶-10⁻⁴ gram atom Group VIII metal.

13. Diphosphines of the general formula (R¹)₂P-CH₂-C(OH)(R⁶)CH₂-P(R¹)₂ in which R¹ represents an optionally polar substituted hydrocarbyl group and R⁶ is an alkyl group.

14. A diphosphine according to claim 13 which is 2-hydroxy-2-methyl-1,3-bis(diphenylphosphino)propane.

15. Process for the preparation of diphosphines according to claim 13, characterized in that a compound of the general formula M(R¹)₂P in which M represents an alkali metal atom is reacted with a compound of the general formula 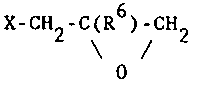 or with a compound of the general formula X-CH₂-C(OH)(R⁶)-CH₂-X, in which general formulae X represents a halogen atom.

## Patentansprüche

1. Katalysatorzusammensetzungen auf Basis eines Metalls der Gruppe VIII und eines zweizähnigen Phosphorliganden der allgemeinen Formel R¹R²P-R⁵-PR³R⁴, worin R bis R⁴ gleiche oder verschiedene, gegebenenfalls polar substituierte Kohlenwasserstoffgruppen bedeuten und R⁵ für eine zweiwertige Brückengruppe steht, worin die die beiden Phosphoratome verbindende Brücke aus drei Kohlenstoffatomen besteht, wobei das zentrale Kohlenstoffatom der Brücke als Substituenten eine Alkylgruppe und eine Hydroxylgruppe trägt.

2. Katalysatorzusammensetzungen nach Anspruch 1, dadurch gekennzeichnet, daß sie als Metall der Gruppe VIII in Form eines Salzes, wie z.B. eines Acetats, eingearbeitetes Palladium enthalten.

3. Katalysatorzusammensetzungen nach Anspruch 1 oder 2, dadurch gekennzeichnet, daß sie außerdem ein Anion einer Säure mit einem pKa-Wert unter 4 enthalten.

4. Katalysatorzusammensetzungen nach Anspruch 3, dadurch gekennzeichnet, daß sie ein Anion einer Säure mit einem pKa-Wert unter 2 enthalten.

5. Katalysatorzusammensetzungen nach Anspruch 3 oder 4, dadurch gekennzeichnet, daß sie das Anion einer Säure mit einem pKa-Wert unter 4 in einer Menge von 2-50 mol pro Grammatom Metall der Gruppe VIII und den zweizähnigen Phosphorliganden in einer Menge von 0,75-1,5 mol pro Grammatom Metall der Gruppe VIII enthalten.

6. Katalysatorzusammensetzungen nach einem oder mehreren der Ansprüche 1-5, dadurch gekennzeichnet, daß sie einen zweizähnigen Phosphorliganden enthalten, in dem die Gruppen R¹ bis R⁴ gegebenenfalls polar substituierte aromatische Kohlenwassersfoffgruppen bedeuten.

7. Katalysatorzusammensetzungen nach einem oder mehreren der Ansprüche 1-6, dadurch gekennzeichnet, daß sie einen zweizähnigen Phosphorliganden enthalten, in dem das erste und das dritte Kohlenstoffatom der die beiden Phosphoratome verbindenden Brücke jeweils zwei Wasserstoffatome tragen.

8. Katalysatorzusammensetzungen nach einem oder mehreren der Ansprüche 1-7, dadurch gekennzeichnet, daß sie einen zweizähnigen Phosphorliganden enthalten, in dem die als Substituent am zentralen Kohlenstoffatom der Brücke auftretende Alkylgruppe nicht mehr als sechs Kohlenstoffatome enthält.

9. Katalysatorzusammensetzungen nach Anspruch 8, dadurch gekennzeichnet, daß sie als zweizähnigen Phosphorliganden 2-Hydroxy-2-methyl-1,3-bis(diphenylphosphino)propan enthalten.

10. Verfahren zur Herstellung von Polymeren, dadurch gekennzeichnet, daß man ein Gemisch aus Kohlenmonoxid und einer oder mehreren olefinisch ungesättigten Verbindungen mit einer Katalysatorzusammensetzung nach einem oder mehreren der Ansprüche 1-9 in Berührung bringt.

11. Verfahren nach Anspruch 10, dadurch gekennzeichnet, daß man die Monomere mit einer Lösung der Katalysatorzusammensetzung in einem Verdünnungsmittel, in dem die Polymere unlöslich oder praktisch unlöslich sind, wie Methanol, in Berührung bringt.

12. Verfahren nach Anspruch 10 oder 11, dadurch gekennzeichnet, daß man als olefinisch ungesättigte Verbindungen Kohlenwasserstoffe wie Ethen oder ein Gemisch aus Ethen und einem α-Olefin wie Propen einsetzt, daß man es bei einer Temperatur von 30-130°C, einem Druck von 5-100 bar einem Molverhältnis von olefinisch ungesättigten Verbindungen zu Kohlenmonoxid im zu polymerisierenden Gemisch von 5:1 bis 1:5 durchführt und daß man pro Mol zu polymerisierender olefinisch ungesättigter Verbindung eine Menge an Katalysatorzusammensetzung einsetzt, die 10⁻⁶-10⁻⁴ Grammatom Metall der Gruppe VIII enthält.

13. Diphosphine der allgemeinen Formel (R¹)₂P-CH₂-C(OH)(R⁶)CH₂-P(R¹)₂, worin R¹ für eine gegebenenfalls polar substituierte Kohlenwasserstoffgruppe und R⁶ für eine Alkylgruppe steht.

14. Diphosphin nach Anspruch 13, bei dem es sich um 2-Hydroxy-2-methyl-1,3-bis(diphenylphosphino)propan handelt.

15. Verfahren zur Herstellung von Diphosphinen nach Anspruch 13, dadurch gekennzeichnet, daß man eine Verbindung der allgemeinen Formel M(R¹)₂P, worin M für ein Alkalimetallatom steht, mit einer Verbindung der allgemeinen Formel 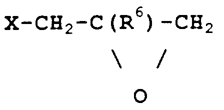 oder mit einer Verbindung der allgemeinen Formel X-CH₂-C(OH)(R⁶)-CH₂-X, in denen X für ein Halogenatom steht, umsetzt.

## Revendications

1. Compositions catalytiques, à base d'un métal du groupe VIII et d'un ligand bidentate phosphoré de la formule général R¹R²P-R-PR³R⁴ dans laquelle les symboles R¹ à R⁴ représentent des radicaux hydrocarbyle à substitution polaire éventuelle, identiques ou différents et R⁵ représente un groupe de pontage bivalent dont le pont reliant les deux atomes de phosphore est constitué de 3 atomes de carbone, l'atome de carbone central du pont portant un groupe alkyle et un groupe hydroxyle en tant que substituants.

2. Compositions catalytiques suivant la revendication 1, caractérisées en ce qu'elles contiennent du palladium, à titre de métal du groupe VIII qui est incorporé, sous la forme d'un sel, comme d'un acétate.

3. Compositions catalytiques suivant la revendication 1 ou 2, caractérisées en ce qu'elles contiennent en outre un anion d'un acide qui possède un pKa inférieur à 4.

4. Compositions catalytiques suivant la revendication 3, caractérisées en ce qu'elles contiennent un anion d'un acide qui possède un pKa inférieur à 2.

5. Compositions catalytiques suivant la revendications 3 ou 4, caractérisées en ce qu'elle contiennent l'anion d'un acide qui possède un pKa inférieur à 4, en une proportion de 2 à 50 moles par atome-gramme de métal du groupe VIII et le ligand bidentate phosphoré, en une proportion de 0,75 à 1,5 mole par atome-gramme de métal du groupe VIII.

6. Compositions catalytiques suivant l'une quelconques des revendications 1 à 5, caractérisées en ce qu'elles contiennent un ligand bidentate phosphoré, dans lequel les symboles R¹ à R⁴ représentent des radicaux hydrocarbyle aromatiques à substitution polaire éventuelle.

7. Compositions catalytiques suivant l'une quelconque des revendications 1 à 6, caractérisées en ce qu'elles contiennent un ligand bidentate phosphoré dans lequel le premier et le troisième atomes de carbone du pont reliant les deux atomes de phosphore portent chacun deux atomes d'hydrogène.

8. Compositions catalytiques suivant l'une quelconque des revendications 1 à 7, caractérisées en ce qu'elles contiennent un ligand bidentate phosphoré, dans lequel le radical alkyle qui est présent, à titre de substituant sur l'atome de carbone central du pont ne contient pas plus de six atomes de carbone.

9. Compositions catalytiques suivant la revendication 8, caractérisées en ce qu'elles contiennent du 2-hydroxy-2-méthyl-1,3-bis(diphénylphosphino)propane, à titre de ligand bidentate phosphoré.

10. Procédé de préparation de polymères, caractérisé en ce que l'on met en contact un mélange de monoxyde de carbone et d'un ou plusieurs composés à insaturation oléfinique avec une composition catalytique suivant l'une quelconque des revendications 1 à 9.

11. Procédé suivant la revendication 10, caractérisé en ce qu'on met les monomères en contact avec une solution de la composition catalytique dans un diluant dans lequel les polymères sont insolubles ou virtuellement insolubles, comme le méthanol.

12. Procédé suivant la revendication 10 ou 11, caractérisé en ce que l'on utilise, à titre de composés à insaturation oléfinique, des hydrocarbures, comme l'éthène, ou un mélange d'éthène et d'une α-oléfine, comme le propène et en ce qu'on l'entreprend à une température de 30 à 130°C, sous une pression de 5 à 100 bars et avec un rapport molaire des composés à insaturation oléfinique au monoxyde de carbone dans le mélange à polymériser de 5:1 à 1:5 et en ce que, par mole de composé à insaturation oléfinique à polymériser, on utilise une quantité de composition catalytique qui contient 10⁻⁶ à 10⁻⁴ atome-gramme de métal du groupe VIII.

13. Diphosphines de la formule générale (R¹)₂P-CH₂-C(OH)(R⁶)CH₂-P(R¹)₂ dans laquelle R¹ représente un radical hydrocarbyle à substitution polaire éventuelle et R⁶ représente un radical alkyle.

14. Diphosphine suivant la revendication 13, qui est le 2-hydroxy-2-méthyl-1,3-bis(diphénylphosphino)-propane.

15. Procédé de préparation de diphosphines suivant la revendication 13, caractérisé en ce que l'on fait réagir un composé de la formule générale M(R¹)₂P, dans laquelle M représente un atome de métal alcalin avec un composé de la formule générale 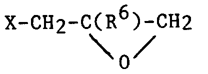 ou avec un composé de la formule générale X-CH₂-C(OH)(R⁶)-CH₂-X, formules générales dans lesquelles X représente un atome d'halogène.
